# DEMANDE DE BREVET EUROPEEN

(11) **EP 0 913 098 A1**
(43) Date de publication de la demande: **06.05.1999**
(21) Numéro de dépôt: 98490019.1
(22) Date de dépôt: 13.07.1998
(51) Int. Cl.: A23L 1/326, A23B 4/06

(54) **Procédé de préparation d'un produit haché surgelé à partir de viande de poisson et produit préparé selon le dit procédé**

(30) Priorité: 08.08.1997 FR 9710353
(71) Demandeur: Lanot, Jean Marc, 34790 Grabels (FR)
(72) Inventeur: Lanot, Jean Marc, 34790 Grabels (FR)
(74) Mandataire: Ecrepont, Robert

(57) **Abrégé**

L'invention se rapporte à un procédé de préparation d'un produit (11) haché surgelé à partir de viande de poisson, ce procédé étant **caractérisé** en ce que :
- on se munit (1) de pièces (2) de poisson à l'état congelé,
- on fractionne (3) chaque pièce (2) sans la décongeler, pour former des morceaux (2A),
- on mélange (M) ces morceaux (2A) avec au moins une substance (4, 5, 6, 7, 8) consistant en de la purée (3) de pommes terre, et ce, en maintenant le mélange (9) ainsi constitué à une température négative (T1),
- on procède (10) au hachage de ce mélange (9), et ce, en maintenant le produit (11) ainsi haché à une température (T2) négative,
- on forme (12) au moins un bloc (13) avec le produit (11) haché, et ce, en maintenant ledit produit (11) à une température négative (T3).

## Description

L'invention se rapporte à un procédé de préparation d'un produit haché surgelé à partir de viande de poisson.

L'invention concerne plus particulièrement, mais on exclusivement un procédé de préparation d'un produit haché surgelé à partir de viande de thon.

L'invention se rapporte également au produit préparé selon ledit procédé.

Un résultat que l'invention vise à obtenir est un procédé qui tout en étant économique à mettre en oeuvre, est fiable et permet l'obtention d'un produit qui :
- ne dégage que très peu d'odeurs lors de sa cuisson, ce qui n'est pas, classiquement, le cas lors de la cuisson de viande de poisson,
- est moelleux en bouche et de goût neutre, ce qui n'est pas non plus, classiquement, le cas,
- présente une valeur protéique comparable à celle de la viande de boeuf,
- contient peu de lipides,
- présente une grande qualité sur le plan bactériologique.

A cet effet, l'invention a pour objet un procédé de préparation d'un produit haché surgelé à partir de viande de poisson, ce procédé étant notamment caractérisé en ce que :
- on se munit d'au moins une pièce de poisson à l'état congelé,
- on fractionne chaque pièce sans la décongeler, pour former des morceaux de taille déterminée,
- on mélange ces morceaux avec au moins une substance, consistant en de la purée de pommes terre, et ce, en maintenant le mélange ainsi constitué à une température négative prédéterminée,
- on procède au hachage de ce mélange, et ce, en maintenant le produit ainsi haché à une température négative prédéterminée,
- on forme au moins un bloc avec le produit haché, et ce, en maintenant ledit produit à une température négative prédéterminée.

L'invention se rapporte également au produit préparé selon ledit procédé.

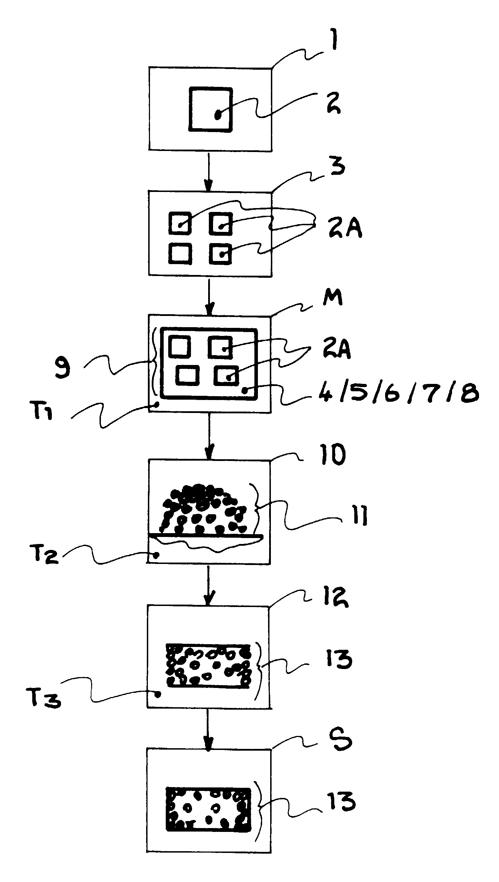

L'invention sera bien comprise à la lecture de la description ci-après faite à titre d'exemple non limitatif, en regard du dessin ci-annexé qui représente un schéma synoptique du procédé de l'invention.

En se reportant au dessin, la succession d'étapes du procédé de l'invention qui permettent d'obtenir le produit selon l'invention.

Pour préparer le produit haché selon le procédé de l'invention, de manière remarquable :
- on se munit 1 d'au moins une pièce 2 de poisson à l'état congelé,
- on fractionne 3 chaque pièce 2 sans la décongeler, pour former des morceaux 2A de taille déterminée,
- on mélange M ces morceaux 2A avec au moins une substance 4, 5, 6, 7, 8 consistant en de la purée 3 de pommes terre, et ce, en maintenant le mélange 9 ainsi constitué à une température négative T1 prédéterminée,
- on procède 10 au hachage de ce mélange 9, et ce, en maintenant le produit 11 ainsi haché à une température T2 négative prédéterminée,
- on forme 12 au moins un bloc 13 avec le produit 11 haché, et ce, en maintenant ledit produit 11 à une température négative prédéterminée T3.

Le respect de ces étapes permet d'obtenir un produit qui présente les caractéristiques annoncées à savoir un produit qui :
- ne dégage que très peu d'odeurs lors de sa cuisson, ce qui n'est pas, classiquement, le cas lors de la cuisson de viande de thon,
- est moelleux en bouche et de goût neutre, ce qui n'est pas non plus, classiquement, le cas,
- présente une valeur protéique comparable à celle de la viande de boeuf,
- contient peu de lipides,
- présente une grande qualité sur le plan bactériologique.

De manière remarquable :
- lors de l'étape 1 qui précède celle 3 de fractionnement, on se munit d'au moins une pièce de thon,
- lors de l'étape M de mélange, en plus de la purée 4 de pommes de terre, on mélange les morceaux 2A avec de la farine 5 de blé,
- lors de l'étape M de mélange, en plus de la purée 4 de pommes de terre, on mélange les morceaux 2A avec des protéines végétales 6,
- lors de l'étape M de mélange, en plus de la purée 4 de pommes de terre, on mélange les morceaux 2A avec au moins l'un des agents 7, 8 de sapidité que sont le sel et le poivre.

De manière également remarquable, lors de l'étape de mélange M des morceaux 2A avec au moins une substance 4, 5, 6, 7, 8, on maintient le mélange 9 constitué à une température négative T1, au plus égale à - 2.5 °C (moins deux virgule cinq degrés C).

De manière encore remarquable, lors de l'étape 10 de hachage, on maintient le produit 11 haché à une température T2 négative prédéterminée, au plus égale à - 2.5 °C (moins deux virgule cinq degrés C).

Le procédé de préparation selon l'invention est donc un procédé de préparation en froid continu.

Cette particularité de froid négatif continu est déterminante pour l'obtention des caractéristiques techniques du produit.

De préférence, après avoir formé 12 au moins un bloc 13 avec le produit 11 haché, on le surgèle S.

L'invention se rapporte également aux moyens pour la mise en oeuvre du procédé et au produit obtenu par sa mise en oeuvre.

## Revendications

1. Procédé de préparation d'un produit (11) haché surgelé à partir de viande de poisson, ce procédé étant caractérisé en ce que :
- on se munit (1) d'au moins une pièce (2) de poisson à l'état congelé,
- on fractionne (3) chaque pièce (2) sans la décongeler, pour former des morceaux (2A) de taille déterminée,
- on mélange (M) ces morceaux (2A) avec au moins une substance (4, 5, 6, 7, 8) consistant en de la purée (3) de pommes terre, et ce, en maintenant le mélange (9) ainsi constitué à une température négative (T1) prédéterminée,
- on procède (10) au hachage de ce mélange (9), et ce, en maintenant le produit (11) ainsi haché à une température (T2) négative prédéterminée,
- on forme (12) au moins un bloc (13) avec le produit (11) haché, et ce, en maintenant ledit produit (11) à une température négative prédéterminée (T3).

2. Procédé selon la revendication 1 **caractérisé** en ce que, lors de l'étape (1) qui précède celle (3) de fractionnement, on se munit d'au moins une pièce de thon.

3. Procédé selon la revendication 1 ou 2 **caractérisé** en ce que, lors de l'étape (M) de mélange, en plus de la purée (4) de pommes de terre, on mélange les morceaux (2A) avec de la farine (5) de blé.

4. Procédé selon l'une quelconque des revendications 1 à 3 **caractérisé** en ce que, lors de l'étape (M) de mélange, en plus de la purée (4) de pommes de terre, on mélange les morceaux (2A) avec des protéines végétales (6).

5. Procédé selon l'une quelconque des revendications 1 à 4 **caractérisé** en ce que, lors de l'étape (M) de mélange, en plus de la purée (4) de pommes de terre, on mélange les morceaux (2A) avec au moins l'un des agents (7, 8) de sapidité que sont le sel et le poivre.

6. Procédé selon l'une quelconque des revendications 1 à 5 **caractérisé** en ce que, lors de l'étape de mélange (M) des morceaux (2A) avec au moins une substance (4, 5, 6, 7, 8), on maintient le mélange (9) constitué à une température négative (T1), au plus égale à - 2.5 °C (moins deux virgule cinq degrés centigrades).

7. Procédé selon l'une quelconque des revendications 1 à 6 **caractérisé** en ce que, lors de l'étape (10) de hachage, on maintient le produit (11) haché à une température (T2) négative prédéterminée, au plus égale à - 2.5 °C (moins deux virgule cinq degrés centigrades).

8. Procédé selon l'une quelconque des revendications 1 à 7 **caractérisé** en ce que, après avoir formé (12) au moins un bloc (13) avec le produit (11) haché, on le surgèle (S).

9. Produit obtenu selon le procédé objet de l'une quelconque des revendications 1 à 8.
